# EUROPEAN PATENT APPLICATION

(11) **EP 1 406 336 A1**
(43) Date of publication of application: **07.04.2004**
(21) Application number: 02405848.9
(22) Date of filing: 01.10.2002
(51) Int. Cl.: H01M 10/40, H01M 6/18, H01M 4/66

(54) **Electrolyte composition having improved aluminium anticorrosive properties**

(71) Applicant: Xoliox SA, 1015 Lausanne (CH)
(72) Inventor: Exnar, Ivan, 4452 Itingen (CH); Di Censo, Davide, 1006 Lausanne (CH)
(74) Representative: Besse, François

(57) **Abstract**

The invention relates to an electrolyte composition for use in an electrochemical battery having an aluminium current collector, the composition comprising an imide salt and a nitrile-based solvent.

## Description

### Field of the invention

The present invention relates to electrochemical devices and more particularly to non-aqueous electrochemical cells with aluminium current collectors.
The present invention more specifically relates to an electrolyte composition containing an imide salt.

### Background of the invention

Lithium secondary batteries exhibit several advantages including high energy density, high voltage, long service life and stable discharge voltage. With the recent rapid progress in the development of portable electronic devices and the future potential for electric vehicles, lithium secondary batteries have attracted great attention for use as the power source to drive these systems.
Because of the relatively high discharge voltage and especially the high charge voltage of lithium and lithium ion secondary batteries - typically in the range between 2.5 and 4.5 V, it is important, that appropriate electrolytes be developed, which can withstand these high charge/discharge voltage without decomposition or corrosion of other battery parts.

To achieve the high power and energy density, in recent years, highly conductive lithium salts such as lithium perchlorate, lithium hexafluorophosphate, lithium tetrafluoroborate and lithium hexafluoroarsenate have found frequent use in liquid, polymer and gel electrolytes for lithium batteries. Lithium hexafluorophosphate is by far the most commonly used conducting lithium salt in secondary lithium ion batteries. Electrolytes containing LiPF6 usually show good conductivity, good electrochemical stability and do not promote aluminium corrosion, a material commonly used as the positive electrode current collector. LiPF6 however suffers from both thermal and hydrolytic instability reacting with water to yield HF and thermally decomposing to LiF and PF5 [1,2]. Since it is practically impossible to remove all traces of water from commercial lithium ion cells, some level of HF formation will be expected. Such acidic conditions have been suggested as being detrimental to the cycling performance and self-discharge of batteries [3].

Several years ago a promising new salt, lithium bistrifluoromethylsulfonylimide (TFMS-Imide) with much greater thermal and hydrolytic stability was introduced by the 3M company. However, the practical use of this salt in liquid and polymer electrolytes never materialised due to severe corrosion of aluminium current collector [4,5].

More recently a promising new salt, lithium bistrifluoroethylsulfonyl imide ( BETI) was synthesized by the 3M company. The salt has good conductivity, cycling characteristic and exhibits a higher protection potential at the aluminium collector [6].

There are many research reports concerning the behaviour of the aluminium anodic oxide film in organic electrolytes for electrolytic capacitor applications. This research is targeted to stabilize the anodic aluminium oxide film by incorporating various anions including borate, phosphate, tungstate, molybdate, manganate and chromate [7- 8].
On the other hand, research focused on the passivation film of the current collector for lithium batteries is quite limited.

Aluminium corrosion protection has been obtained with a variety of anhydrous polar aprotic electrolyte composition known in the art; as described, for example, in Pat. Nos. WO 0152341A1 (using perfluoroalkanesulfonate salts) or W09829389A1 (using malononitrilederivate anion salts). The additive salts used in said compositions contribute to increase the viscosity of the electrolyte, thereby reducing the overall ionic conductivity and the power of the battery, in addition to the high cost for the synthesis of these sophisticated compounds.

There is therefore a need for an electrolyte composition or an additive, which could prevent corrosion of aluminium current collectors by the imide or methide salts and that provides good thermal and hydrolytic stability, high ion conductivity and good anodic and cathodic electrochemical stability. This would improve long-term high power stability and self-discharge of such batteries.

### Summary of the invention

The primary object of the present invention is to develop an electrolyte composition for use in lithium and lithium ion primary and secondary batteries that provides for use of imide or methide salts with an aluminium current collector with emphasis on the aluminium corrosion protection. More specifically, the primary object of the present invention is to develop an improved electrolyte composition for use in a lithium secondary battery, which can withstand the high working charge voltage without corrosion of the current collector and which will not decompose or be oxidized when subjected to such high-voltage conditions.

The inventors unexpectedly found that in imide salt based electrolytes containing a nitrile-based solvent (acetonitrile, methoxyacetonitrile, etc) the voltage where corrosion occurs is shifted to a more positive region. The shift in the repassivation potential is in the order of some tenth of volts and it is dependent on the nitrile-based solvent. Observed was for example, about 0.4V for AN and 0.5V for MAN. A preferred aspect of this invention is, that a voltage shift is also observable in electrolytes consisting of different solvents with the addition of a small amount of nitrile as a co solvent. Even for very small amounts, less than 1% of a nitrile, significant effects can be observed. A variety of compatible co-solvents may be used, in particular propylene carbonate (PC), ethylenecarbonate (EC) or gammabutyrolactone (GBL); alternative co-solvents are also dimethylcarbonate (DMC), diethylcarbonate (DEC), ethylmethylcarbonate (EMC), diethoxyethan, dimethoxyethan, 1,3 dioxolane or tetrahydrofurane.
The ratio between the nitrile solvent and the co-solvent like PC, DME, GBL, EC, DMC, DEC, etc. is preferably between 0.1 and 99.9% and more preferably between 10 and 90%.

It will be appreciated that the electrolyte may be made with the said solvents and with addition of get-forming polymer material as polivinilidenfluoride, polyurethane, polyethylene oxide, polyacetonitrile, polymethylacrylate, polyacrylamide, polyvinylacetate, polyvinypyrrolidone, polytetraethylene glycol diacrylate, copolymers of any of the foregoing and combinations thereof.
Plasticisers such as tetra(ethylene glycol) dimethyl ether (tetraglyme) or N-methyl-pyrrolidone may also be provided as co-solvent to ensure that the solvent does not crystallize at the desired operating temperature.

For the present invention the cathodic material or cathode active material (i.e. insertion compound) is any material, which functions as a positive pole in an electrochemical cell. Representative cathodic materials include cobalt oxides, manganese oxides, molybdenum oxides, vanadium oxides, titanium oxides, titanium sulfides, chromium oxides, copper oxides, copper sulfides, lithiated cobalt oxides, e.g. LiCoO2, LiCoVO4 and LiCoNiO2, lithiated manganese oxides, e.g. LiMn2O4, layered lithiated metal oxides, e.g. LiM02, dopped lithiated layered manganese oxides, e.g. LiMn0.5Ni0.5O2, LixMn2O4 (spinel), lithiated nickel oxides, e.g. LiNiO2 and LiNiV04 and mixtures thereof. A positive electrode for this invention is
prepared for example by mixing of 85% active material, 10% conductive diluents (graphite, carbon black) and 5% binder ( PVDF, EPDM). These were blended and mixed together with a solvent.
The mixture was then coated onto aluminium foil current collector using a doctor blade technique, to achieve a desired thickness for the final electrode.

### Brief Description of the Drawings

The invention will now be further and more particularly described, by way of example only as illustration, without limiting the scope of the invention and with reference to the accompanying drawings in which:
Fig.1 is a cyclic voltammogram (CV) relative to an aluminium foil in an electrolyte solution composed of EC:DME 1:1 (volume) and lithium TFMS-Imide at the concentration of 1 mol/l. The scan rate was 0.5mV/s. The observed repassivation potential was around 3.7 V vs. Li.

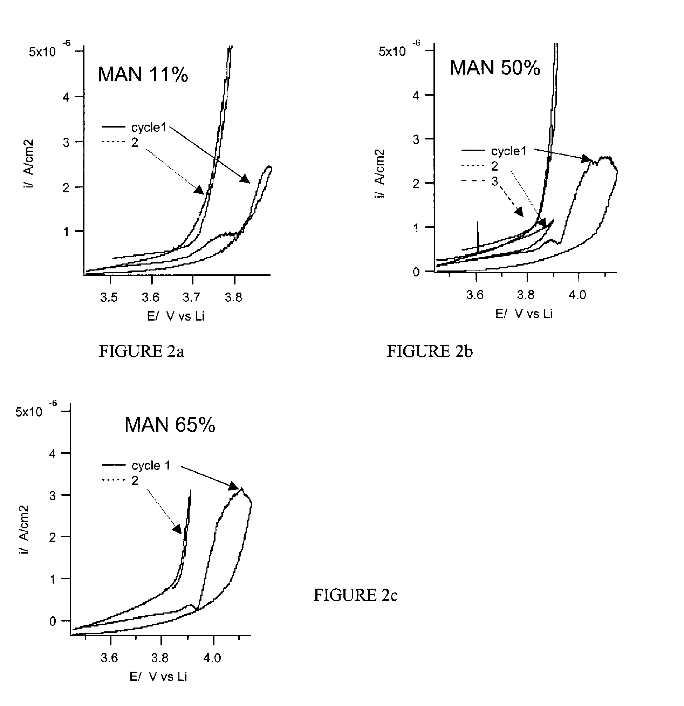

Fig.2 is a cyclic voltammogram (CV) relative to an aluminium foil current collectors in electrolyte solutions composed of mixed solvents EC:DME 1:1 (volume) with methoxyacetonitrile (MAN) in 11, 50, 65 percentages by weight with lithium TFMS-Imide salt at the concentration of 1 mol/l. The scan rate was 0.5mV/s.
Fig.3 is a CV relative to an aluminium foil current collector in an electrolyte solution composed of MAN 100% and lithium TFMS-Imide at the concentration of 1 mol/l. The scan rate was 0.5mV/s. The observed repassivation potential is below 4.2V.
Fig.4 summarizes the CV results form the mixed solvents EC:DME (1:1 by volume) and MAN with lithium TFMS-Imide salt. In the x-axis is reported the MAN percentage by weight and the y-axis is referred to the repassivation potential observed during initial cycles.
Fig.5 shows CVs relative to an aluminium foil current collector in an electrolyte solution composed of gammabutyrolactone(GBL) 100% and lithium BETI at the concentration of 1 mol/l. The numbers on the curves refer to the cycle number. The observed repassivation potential is around 4.6 V vs. Li..
Fig.6 shows CVs relative to an aluminium foil current collector in an electrolyte solution composed of mixed solvents, GBL with MAN in 77 and 53 pecentages by weight with lithium BETI salt at the concentration of 1 mol/l. The scan rate was 0.5mV/s. The numbers on the curves refer to the cycle number.

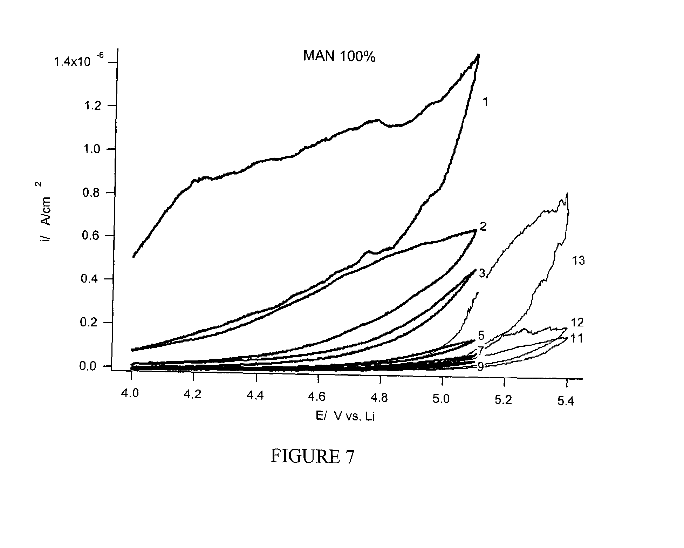

Fig.7 shows a CV relative to an aluminium foil current collector in an electrolyte solution composed of MAN 100% and lithium BETI at the concentration of 1 mol/l. The scan rate was 0.5mV/s. The numbers on the curves refer to the cycle number. The observed repassivation potential is around 5 V vs. Li.
Fig.8 shows amperometry relative to an aluminium foil current collector in an electrolyte solution composed of GBL 100% (solid line) and MAN100% (dotted line) with lithium BETI salt at the concentration of 1 mol/l. The two level of polarisation used were 4.55 and 5.05V vs. Li.
Fig.9 shows CVs relative to an aluminium foil current collector in an electrolyte solution composed of Acetonitrile (AN) 100% and lithium TFMS-Imide at the concentration of 1 mol/l. The scan rate was 0.5mV/s. Cycles 2 and 3 are shown. The observed repassivation potential is above 4.1 V vs. Li.
Fig.10 shows CVs relative to an aluminium foil current collectors in an electrolyte solution composed of mixed solvents EC:DME 1:1 (volume) with AN 44% by weight the dissolved salt was lithium TFMS-Imide at the concentration of 1 mol/l. The scan rate was 0.5mV/s. The observed repassivation potential is improved from that of pure EC:DME containing electrolyte, Fig 1.

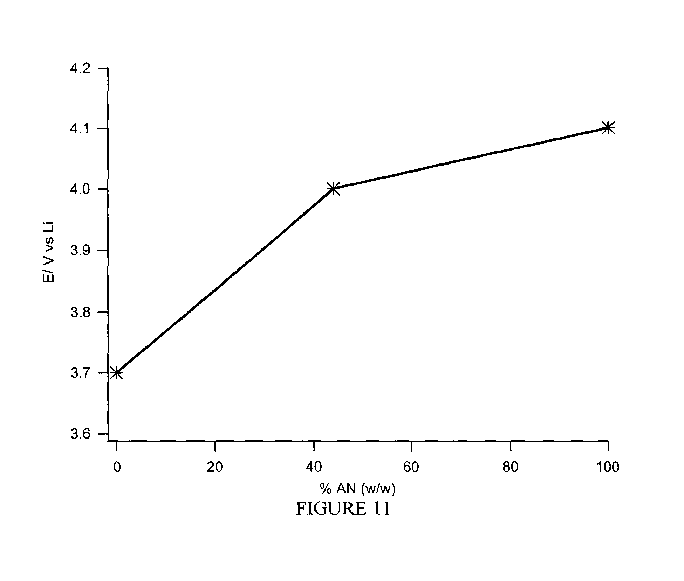

Fig.11 summarizes the CVs results form the mixed solvents EC:DME (1:1 by volume) and AN with lithium TFMS-Imide salt. In the x-axis is reported the MAN percentage by weight and the y-axis is referred to the repassivation potential observed after few cycles.
Fig.12 shows the 20C discharge capacity vs. cycle number for Li4Ti5O12/LiCoO2 cell with lithium TFMS-Imide 1mol/l in AN electrolyte at room temperature.
Fig.13 shows cyclic voltammograms (CV) relative to an aluminium foil current collector in an electrolyte solution composed of MAN) 100% and 1mol/l lithium TFMS-Imide at 25, 40 and 60 grad Celsius. The scan rate was 0.5mV/s. Cycles 2 and 3 are shown. The observed repassivation potentials are in between 4.1 and 4.2V vs. Li.

### Detailed description of the invention

The present invention discloses a family of electrolyte compositions for use in a lithium secondary battery with improved anticorrosive properties of an aluminium current collector. The electrolyte composition disclosed in the present invention comprises a lithium ion, which is provided from a linear imide salt such as lithium bistrifluoromethylsulfonylimide or bistrifluoroethylsulfonylimide, etc., or from cyclic imide salt dissolved in organic solvent consisting essentially of nitrile which can be either acetonitrile, methoxyacetonitrile, etc. This organic solvent can be either a mix with other co-solvents like propylene carbonate, ethylene carbonate, gammabutyrolactone, ethylmethyl carbonate, dimethylcarbonate, diethylcarbonate, diethoxyethan, dimethoxyethan, 1,3 dioxolane, ethylpropionate, buthylethyl carbonate, tetrahydrofuran, etc.
The ratio between the nitrile and and the co-solvent may range between 0.1/99.9 and 100/0, preferably between 10/90 and 90/10.
The concentration of the litium salt is preferably between 0.6M and 2.5M more preferably at about 1 M.
The electrolyte composition disclosed in the present invention, which can withstand charge/discharge voltage of up 4.2 V or higher, depend on imide salt, can be advantageously utilized in lithium secondary batteries that utilise LiCoO2, LiCoNiO2, LiNiO2, LiMn2O4, LiFeP04, LiCoPO4, LiMnPO4, LiV2O5 etc., on an aluminium current collector.

The present invention will now be described more specifically with reference to the following examples. It to be noted that following descriptions of examples, including the preferred embodiment of this invention, are presented herein for purposes of illustration and description, and are not intended to be exhaustive or to limit the invention to the precise form disclosed. The water content of all the electrolytes used was less than 100ppm .

### Example 1

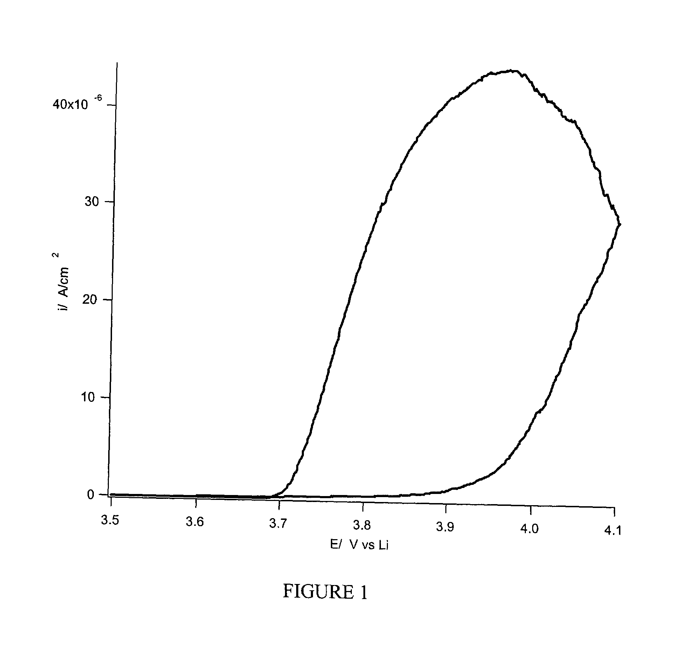

In this comparative example a solution composed of EC:DME and lithium TFMS-Imide 1mol/l was introduced in a three electrode electrochemical cell composed of aluminium working electrode and lithum metal as counter and reference electrode. The experiments were carried out in a Giacomex glove-box (water less than 10ppm and oxygen less then 2ppm). The electrochemical measurements were carried out by means of AUTOLAB system (PGSTAT30) employing GPES4.9 software. Referring to Fig.1 we can observe a repassivation potential in the region of 3.7V vs. Li.

### Example 2

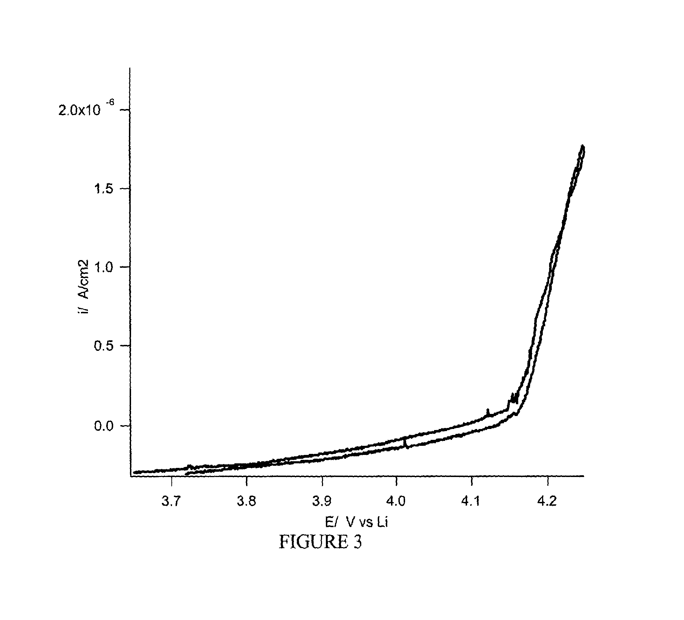

In this comparative example a solution composed of MAN and lithium TFMS-Imide 1mol/l was introduced in a tree electrode electrochemical cell. The cell was composed of aluminium working electrode and Li4Ti5O12 deposited on Ti-metal sheet and rod respectively as counter and reference electrode. CV test were run in an experimental set-up as described in example 1. Referring to Fig.3 we can observe a repassivation potential in the region of 4.15-4.17V vs. Li. Compared with the experiment in example 1 we observed a shift in the repassivation potential approaching half a Volt.

### Example 3

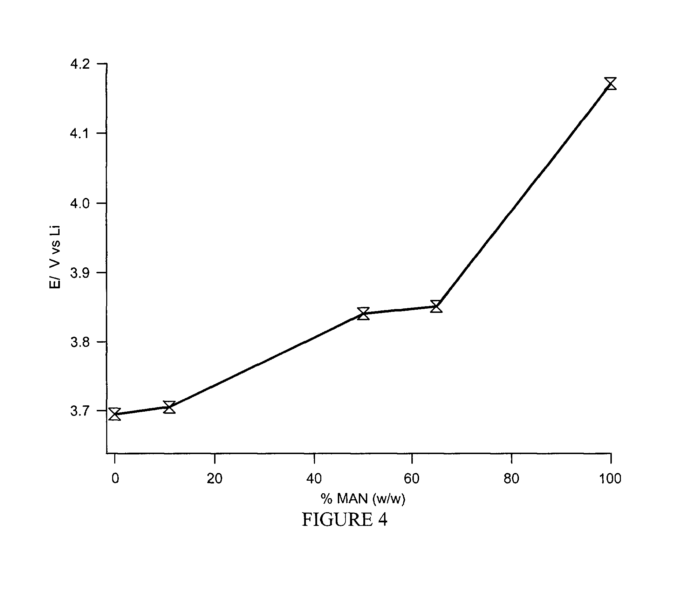

A nonaqueous electrolyte mixture of ECDME and MAN with lithium TFMS-Imide as salt in the concentration of 1mol/l was introduced in an electrochemical cell as described in example 2. The percentages of MAN by weight were 11 % 50% and 65%. With reference to Fig.4 and comparative example 1 and 2 the repassivation potential shift can be observed. It indicates that the use of nitrile solvent to improve corrosion resistance of the aluminium current collector is still effective in mixtures with otherwise corrosive electrolytes.

### Example 4

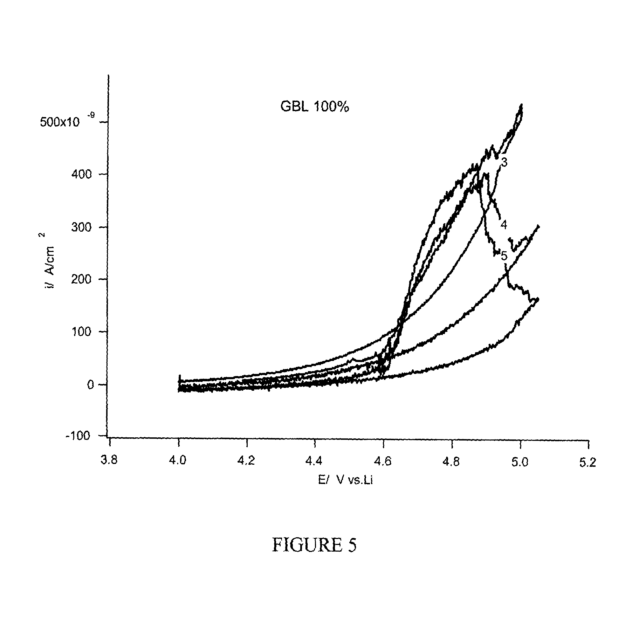

In this comparative example a solution composed of GBL in which lithium BETI salt is dissolved at a concentration of 1 mol/l was introduced in an electrochemical cell as described in example 2. CV tests were run in an experimental set-up as described in example 1. Referring to Fig.5 we can observe a repassivation potential in the region of 4.6V vs. Li.

### Example 5

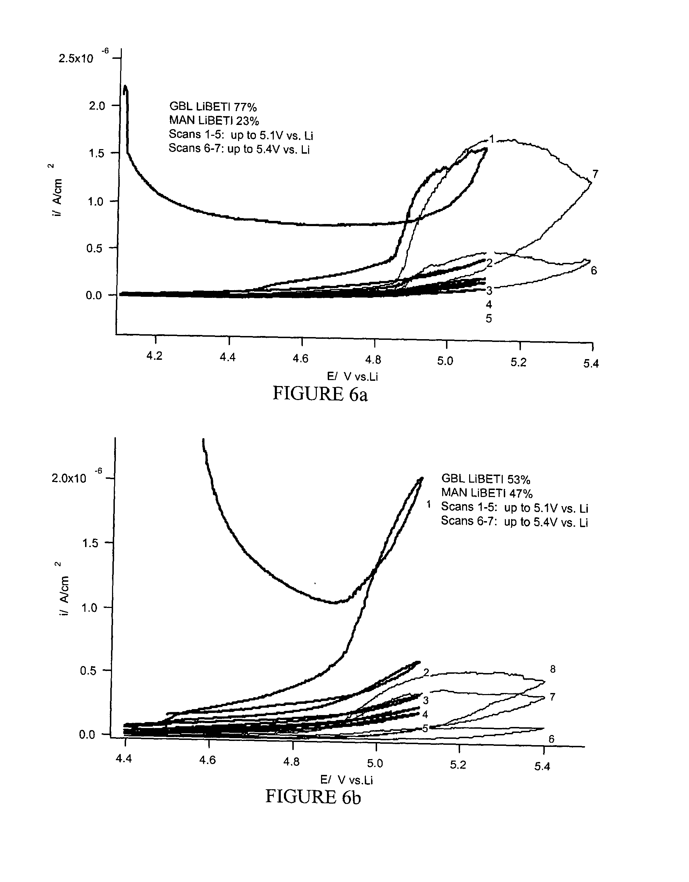

A nonaqueous electrolyte mixture of GBL and MAN with lithium BETI salt at the concentration of 1 mol/l was introduced in an electrochemical cell as described in example 2. CV tests were run in an experimental set-up as described in example 1. The percentages of MAN by weight were 23% and 47%. Referring to Fig.6 the results indicate that the use of a nitrile solvent improves the corrosion resistance of aluminium current collectors in mixtures with otherwise corrosive electrolytes. Compared with experiments in example 3 we observed a shift in the repassivation potential approaching half a volt. From the 1^{st} to the 5^{th} cycle were run going up to 5.1V vs.Li in the potential scan range, the following cycles were than extended to higher potential, i.e. 5.4V. It is evident that by cycling bellow 5.1V no corrosion can be observed, while cycling above 5.1 lead to an evident corrosion mechanism which determines a pitting potential which is around 4.9V. However in both case the use of an electrolyte composition as disclosed by the present invention is effective in shifting the pitting potential for corrosion on aluminium.
The presence of the nitrile solvent results in providing a protection of aluminium against corrosion. After prolonged exposure to polarisation at higher voltages the additional protection can gradually decrease. This protection can however be partially restored by polarizing the aluminium electrode at lower potentials. In a real battery this potential corresponds to the voltage value that the cathode can attain by simply discharging the battery.

### Example 6

A solution composed of MAN in which lithium BETI salt is dissolved at the concentration of 1 mol/l was introduced in an electrochemical cell as described in example 2. CV test were run in an experimental set-up as described in example 1. Referring to Fig.5 we can observe a repassivation potential in the region of 5.1V vs. Li. Compared with experiment in example 4 we observed a shift in the repassivation potential approaching half a Volt.

### Example 7

### Amperometry

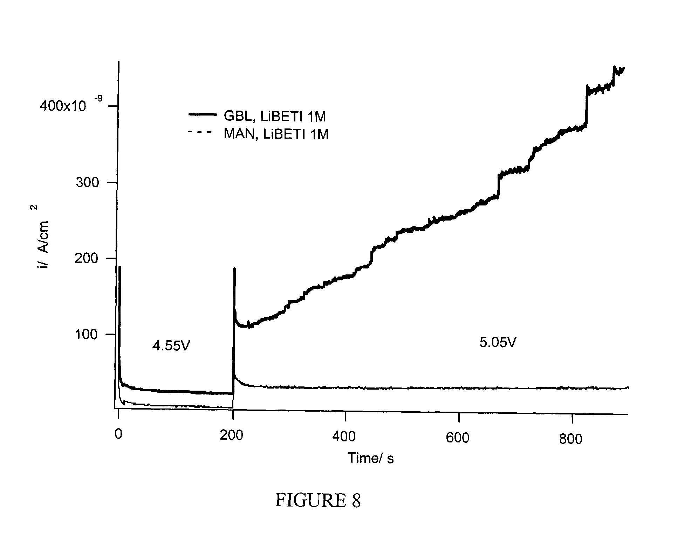

A composed of MAN and solution composed of GBL in which lithium BETI salt is dissolved at the concentration of 1 mol/l were indipendently introduced in electrochemical cells as described in example 2. The aluminium electrodes were polarized at a fixed voltage, 4.55 and after 5.05V. Referring to Fig.8 we can observe the benefic effect of the nitrile solvent (dotted line) respect to the GBL solution (solid line) in avoiding aluminium corrosion. While for the GBL solution the current increase with time, for the MAN solution the current is practically constant.

### Example 8

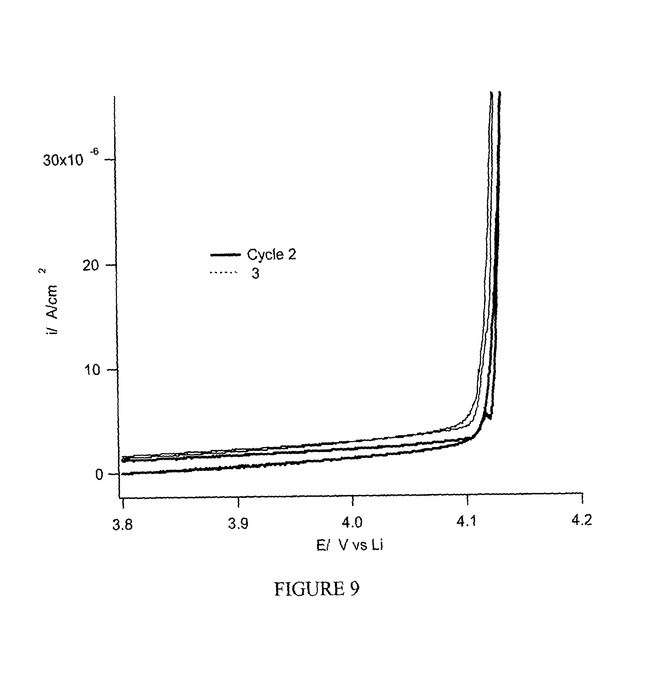

In this comparative example a solution composed of AN in which is dissolved lithium TFMS-Imide salt at the concentration of 1 mol/l was introduced in an electrochemical cell as described in example 2. CV test were run in an experimental set-up as described in example 1. Referring to Fig.9 we can observe a repassivation potential above 4.1V vs. Li. Compared with experiment in example 1 we observed a shift in the repassivation potential of more then 400mV.

### Example 9

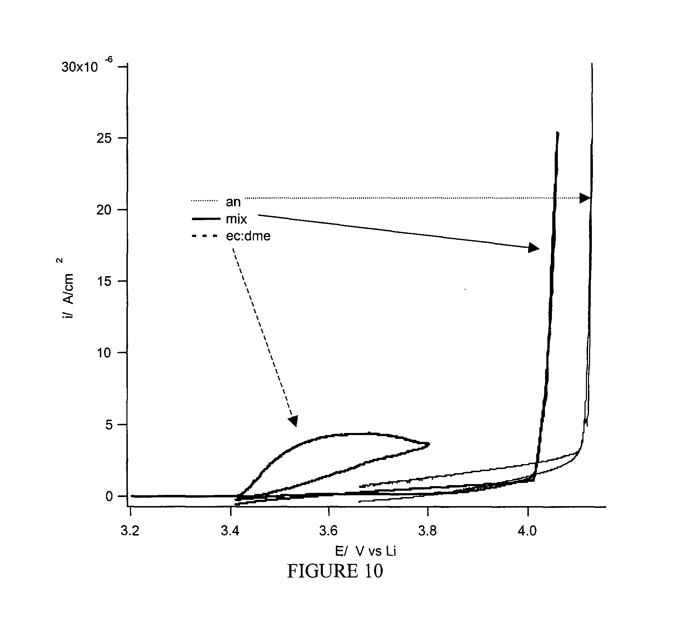

A nonaqueous electrolyte mixture of ECDME and AN with Li-imide as salt in the conc. of 1mol/l was introduced in an electrochemical cell as described in example 2. CV test were run in an experimental set-up as described in example 1. The percentages of AN by weight were 44%. With reference to Fig.10 and comparative example 1 and 2 the repassivation potential shift can be observed. It indicates that the use of nitrile solvent to improve corrosion resistance of the aluminium current collector is still effective in mixtures with otherwise corrosive electrolytes.

### Example 10

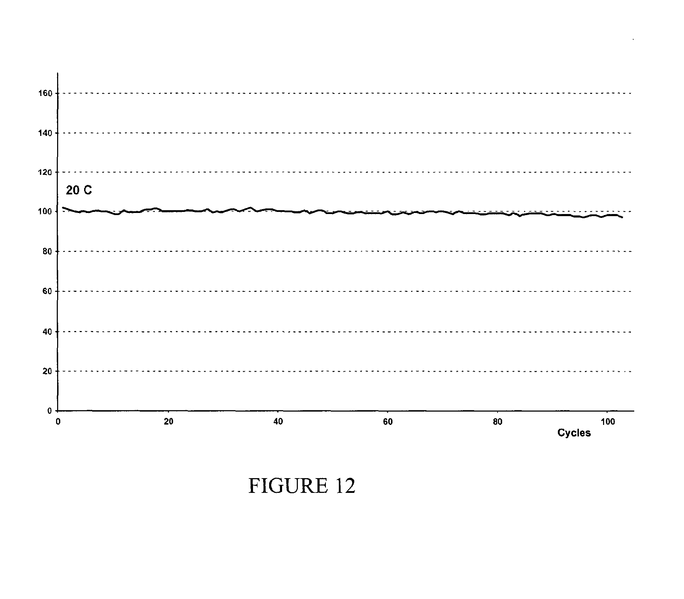

Formation of the electrochemical cell.
In order to employ the present invention in a system similar to a possible commercial high power cell, an electrochemical cell, Swagelok type, was assembled. The cathode was a commercial LiCoO2 electrode, in which the active material is deposited on an aluminium foil, and the anode was prepared by casting an aluminium foil with a paste composed of Li4Ti5O12 91% Carbon black2% graphite powder 2% and polymeric binder 4%. The separator was a polyethylene micro porous membrane and the electrolyte was a solution of AN and lithium TFMS-Imide 1 mol/l. 250 cycles were run at 20C-rate using a cut-voltage of 4.15V vs. Li. Fig.12 illustrates the voltage versus capacity for this cell. The small capacity fade of the cell indicates that nitrile solvent in accordance with the present invention can be effectively utilized in electrochemical cell for drastically reducing the Al corrosion.

### Example 11

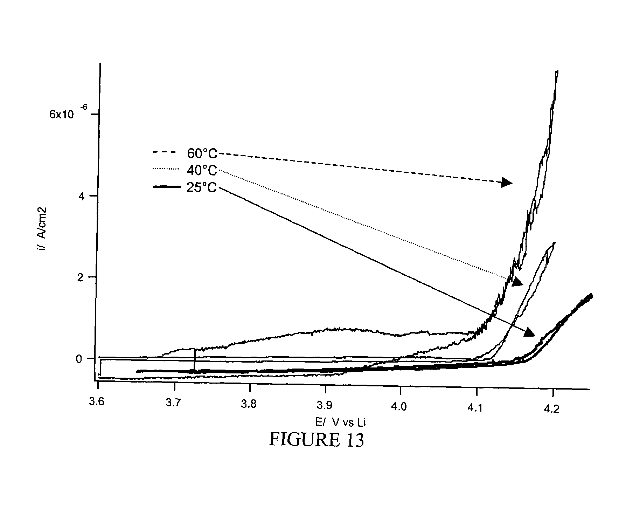

A CV corrosion test was conducted in an electrochemical system in accordance with example 2 at different temperature. As shown by curves in Fig. 13 the shift in repassivation potential is still effective by demonstrating that using an electrolyte composition in accordance with the present invention improves performance at high temperature.

### References

[1] Ivan Exnar, Beat Furler and Roman Imhof 10^{th} Int.Meeting on Lithium Battery, Como, Italy, 2000
[2]Haschimoto Chemical, Product Specifications, 1994
[3] S.Lu, W.F. Averill, A.D. Robertson and W.F. Howard,Jr, in Proc. 13^{th} Int. Seminar on Primary and Secondary Battery Technology and Application, Florida, Boca Raton 1996
[4] S.Sylla, J.Y. Sanchez and M.Armand, Electrochim. Acta, 37 (1996), 1699
[5] A. Weber, J.Electrochem. Soc., 138 (9) (1991) 2586
[6] Larry J. Krause at all, J.of Power Sources 68 (1997) 320
[7] K.Shimizu, G.M.Brown, K.Kobyashi, P.Skeldon, G.E.Thompson and G.C. Wood, Corrosion Science, Vol. 40, (1998)
[8] M.Ue, H.Ashaina and S.Mori, Proceedings of the 7^{th} international Symposium on Oxide Films On Metal And Alloys, ed. by K.R.Hebert, G.E.Thomsonp, The Electrochemical Society, Inc. ; vol. 94-25.

## Claims

1. Electrolyte composition for use in an electrochemical battery having an aluminium current collector, said composition comprising an imide salt and being furthermore **characterized by** the fact that it comprises a nitrile-based solvent.

2. Electrolyte composition according to claim 1 comprising furthermore another co-solvent such as propylene carbonate (PC), ethylenecarbonate (EC), gammabutyrolactone (GBL); dimethylcarbonate (DMC), diethylcarbonate (DEC), ethylmethylcarbonate (EMC), diethoxyethan, dimethoxyethan, 1,3 dioxolane or tetrahydrofurane.

3. Electrolyte composition according to the previous claim wherein the ratio between the nitrile-based solvent and the other co-solvent ranges between 99.9/0.1 and 0.1/99.9 and more preferably between 90/10 and 10/90.

4. Electrolyte composition according to anyone of the previous claims furthermore comprising a gel-forming polymer such as polivinilidenfluoride, polyurethane, polyethylene oxide, polyacetonitrile, polymethylacrylate, polyacrylamide, polyvinylacetate, polyvinypyrrolidone, polytetraethylene glycol diacrylate, copolymers of any of the foregoing and combinations thereof.

5. Electrolyte composition according to anyone of the previous claims furthermore comprising a plasticiser such as tetra(ethylene glycol) dimethyl ether (tetraglyme) or N-methyl-pyrrolidone.

6. Electrochemical battery having an aluminium current collector and containing an electrolyte composition which comprises an imide salt, said composition being **characterized by** the fact that it furthermore comprises a nitrile-based solvent.
